# EUROPÄISCHE PATENTSCHRIFT

(11) **EP 1 819 573 B1**
(45) Veröffentlichungstag und Bekanntmachung des Hinweises auf die Patenterteilung: **22.12.2010**
(21) Anmeldenummer: 05801414.3
(22) Anmeldetag: 11.10.2005
(51) Int. Cl.: B62D 1/28, B62D 6/00

(54) **VERFAHREN UND VORRICHTUNG ZUM FAHRERSCHUTZ BEI FAHRERUNABHÄNGIGER LENKMOMENTÜBERLAGERUNG**
METHOD AND DEVICE FOR PROTECTING A DRIVER DURING THE SUPERIMPOSITION OF A DRIVER-INDEPENDENT STEERING MOMENT
PROCEDE ET DISPOSITIF DE PROTECTION DU CONDUCTEUR EN CAS DE SUPERPOSITION DE COUPLES DE DIRECTION INDEPENDANTE DU CONDUCTEUR

(30) Priorität: 26.11.2004 DE 102004057262
(43) Veröffentlichungstag der Anmeldung: 22.08.2007
(73) Patentinhaber: Robert Bosch GmbH, 70442 Stuttgart (DE)
(72) Erfinder: LEE, Wei-Chia, 71229 Leonberg (DE)
(86) Internationale Anmeldenummer: PCT/EP2005/055158
(87) Internationale Veröffentlichungsnummer: WO 2006/056503

(56) Entgegenhaltungen:
- EP-A- 0 640 903
- DE-A1- 19 635 892
- FR-A- 2 780 696
- US-B1- 6 212 452

## Beschreibung

### Stand der Technik

Die Erfindung betrifft ein Verfahren und eine Vorrichtung zur Deaktivierung eines die Lenkung beeinflussenden Fahrerassistenzsystems.

Fahrerassistenzsysteme helfen dem Fahrer, die Fahraufgabe ordnungsgemäß zu bewältigen. Seit langem gibt es Systeme, welche in das Bremssystem (ABS, ESP) oder in den Antriebsstrang (z.B. Tempomat-Funktion) fahrerunabhängig eingreifen. Durch neuere elektromechanische Lenkungen (z.B. EPS = "Electric Power Steering") ist es möglich, haptische Rückmeldungen am Lenkrad durch Überlagerung von Lenkmomenten zu erzeugen oder sogar automatisch zu lenken. Diese Möglichkeit bietet neue Möglichkeiten für Fahrerassistenzsysteme.

Bei einem semiautonomen Einparkassistenten berechnet das System zuerst für die erfasste Parklücke eine optimale Bahn für den Einparkvorgang. Aus den erfassten Abweichungen zwischen der durchgeführten Ist-Bahn und der optimalen Soll-Bahn versucht das System, mit Hilfe eines Reglers den optimalen Lenkeinschlag zu erzeigen, um das Fahrzeug bestmöglichst in die Parklücke zu führen.

Aus der US 6,212,452 B1 ist ein automatisches Lenksystem bekannt, welches die Lenkbewegungen des Fahrers während eines automatischen Lenkeingriffs erfasst, um zuverlässig den automatischen Lenkeingriff abzubrechen. Dieser wird dann abgebrochen, wenn der Fahrer spontan einen Lenkeingriff durchführt und das Lenkmoment einen Referenzwert überschreitet.

Aus der DE 196 35 892 A1 ist eine automatische Fahrvorrichtung bekannt. Dabei können in einer Speichereinheit gespeicherte Modellfahrdaten mit dem in einen automatischen Betriebszustand gesetzten Lenksystem des Fahrzeugs reproduziert werden und das Fahrzeug kann in Übereinstimmung mit den Modellfahrdaten automatisch gelenkt werden, so dass ein hochbequemes und zuverlässiges automatisches Fahren beim automatischen Abstellen des Fahrzeugs usw. mit einer einfachen Struktur erreicht wird, was andernfalls eine hohe Festigkeit des Fahrzeugfahrers erfordern würde.

Aus der EP 0 640 903 A1 ist ein Fahrerassistenzsystem für ein Fahrzeug bekannt. Dazu wird eine Videokamera oder ein entsprechender Sensor am Fahrzeug angebracht und zur Erkennung der Straßenmarkierungen verwendet. Eine zugeordnete Signalverarbeitungseinheit schätzt die Querposition des Fahrzeugs relativ zu den Fahrbahnmarkierungen ab. Ein an die Lenkvorrichtung angekoppelter Elektromotor wird benutzt, um ein Lenkmoment bereitzustellen, welches entweder das Lenkmoment vom Fahrer unterstützt oder ihm entgegenwirkt

Die Merkmale der Oberbegriffe der unabhängigen Ansprüche sind der US 6,212,452 B1 entnommen.

### Vorteile der Erfindung

Die Erfindung betrifft ein Verfahren zur Deaktivierung eines die Lenkung beeinflussenden Fahrerassistenzsystems,
- bei dem durch das Fahrerassistenzsystem eine fahrerunabhängige Systemlenkgröße auf das Lenkrad angewandt wird,
- bei dem der Wert einer durch den Fahrer auf das Lenkrad angewandten Fahrerlenkgröße ermittelt wird und
- abhängig von der Fahrerlenkgröße das Fahrerassistenzsystem deaktiviert wird.
dadurch gekennzeichnet,
- dass es sich bei dem Fahrerassistenzsystem um ein Spurhalteassistenzsystem handelt und
- dass das Spurhalteassistenzsystem deaktiviert wird, wenn der Betrag der Fahrerlenkgröße während eines Zeitintervalls vorgebbarer Länge stets einen vorgebbaren Schwellenwert unterschreitet.

Damit können Fahrerassistenzsysteme, in denen für den Fall, dass der Fahrer seine Hände vom Lenkrad nimmt und das Fahrerassistenzsystem ohne Fahrerkontrolle nicht lenken soll, deaktiviert werden.

Eine vorteilhafte Ausgestaltung der Erfindung ist **dadurch gekennzeichnet, dass** es sich bei der Systemlenkgröße um ein vom Fahrerassistenzsystem fahrerunabhängig auf das Lenkrad aufgebrachtes Drehmoment und /oder aufgebrachten Lenkwinkel und/oder aufgebrachte Lenkwinkelgeschwindigkeit handelt.

Eine vorteilhafte Ausgestaltung der Erfindung ist **dadurch gekennzeichnet, dass** es sich bei der Fahrerlenkgröße um ein vom Fahrer auf das Lenkrad aufgebrachtes Drehmoment und /oder aufgebrachten Lenkwinkel und/oder aufgebrachte Lenkwinkelgeschwindigkeit handelt.

Weiter betrifft die Erfindung ein Fahrerassistenzsystem zur Beeinflussung der Lenkung, enthaltend
- Aktormittel, mit denen eine fahrerunabhängige Systemlenkgröße auf das Lenkrad angewandt wird,
- Ermittlungsmittel, mit denen der Wert einer durch den Fahrer auf das Lenkrad angewandten Fahrerlenkgröße ermittelt wird und
- Deaktivierungsmittel, mit denen abhängig von der Fahrerlenkgröße das Fahrerassistenzsystem deaktiviert wird.
dadurch gekennzeichnet,
- dass es sich bei dem Fahrerassistenzsystem um ein Spurhalteassistenzsystem handelt und
- dass das Spurhalteassistenzsystem deaktiviert wird, wenn der Betrag der Fahrerlenkgröße während eines Zeitintervalls vorgebbarer Länge stets einen vorgebbaren Schwellenwert unterschreitet.

Die Vorteile des erfindungsgemäßen Verfahrens äußern sich selbstverständlich auch als Vorteile der erfindungsgemäßen Vorrichtung und umgekehrt.

### Zeichnung

Die Zeichnung besteht aus den Figuren 1 bis 3
Figur 1 zeigt den Signalfluss einer Lenkassistenzfunktion.
Figur 2 zeigt den Ablauf des erfindungsgemäßen Verfahrens.
Fig. 3 zeigt den Aufbau der erfindungsgemäßen Vorrichtung.

### Ausführungsbeispiele

Durch die Messung und ggf. Auswertung von Lenkradgrößen wie Lenkradwinkel, Drehmoment und Lenkradwinkelgeschwindigkeit ist es möglich, die Fahrerabsicht zu erkennen. Anhand der gemessenen bzw. ermittelten Werte kann ein aktiviertes Fahrerassistenzsystem entscheiden, ob eine vorliegende Momentüberlagerung durch dieses System abgebrochen werden soll.

Bei einem semiautonomen Einparkassistenten mit automatischer Lenkung werden Lenkmomente auf das Lenkrad überlagert. Sind die dadurch auf die Räder übertragenen Momente höher als die Reibkräfte zwischen Reifen und Fahrbahn, dann lenkt das Fahrzeug automatisch. Dabei können die auf das Lenkrad wirkenden Momente bis zu 10 Nm betragen, um bei höheren Geschwindigkeiten die vorher berechnete Trajektorie noch zu regeln.

Für die Sicherheit des Fahrers wird die Lenkgeschwindigkeit (d.h. wie schnell sich das Lenkrad dreht) überwacht. Zusätzlich wird das vom Fahrer manuell auf das Lenkrad aufgebrachte Lenkmoment, das sogenannte Handmoment, berücksichtigt. Legt der Fahrer während des Parkvorgangs die Hände an das Lenkrad, dann wird die Zeit registriert. Hält der Fahrer das Lenkrad an oder lenkt er während eines Zeitintervalls vorgegebener Länge (z.B. 200 ms) gegen das automatisch aufgebrachte Lenkmoment, dann schaltet die Überlagerung ab, d.h. es wird kein automatisches bzw. fahrerunabhängiges Lenkmoment mehr aufgebracht. Der Fahrer kann jetzt die Steuerung des Lenkrads übernehmen. Der Fahrer wird über die Abschaltung des Systems optisch oder akustisch gewarnt. Die optische Warnung kann beispielsweise über eine Leuchtdiode oder einen Text im Kombiinstrument bzw. Navigationssystem erfolgen.

Bei manchen Funktionen wie z.B. bei Spurhalteassistenzsystemen (z.B. LKS = "lane keeping support") ist gewünscht, dass der Fahrer seine Hände am Lenkrad hält, während die Momentenüberlagerung stattfindet. Dies ist deshalb erforderlich, um einen dahingehenden Missbrauch des Spurhalteassistenzsystems zu vermeiden, dass der Fahrer das System alleine ohne seine Mitwirkung lenken lässt. Dazu wird das vom Fahrer aufgebrachte Handmoment aus der Differenz zwischen dem mit einem Drehmomentsensor erfassten Handmoment und dem fahrerunabhängig aufgebrachten Lenkradmoment ermittelt. Der Wert des fahrerunabhängig aufgebrachten Lenkradmoments kann z.B. aus den Ansteuergrößen des Aktors ermittelt werden, welcher das fahrerunabhängige Lenkradmoment erzeugt.

Das vom Fahrer aufgebrachte Handmoment wird laufend registriert. Verschwindet dieses Handmoment während eines Zeitintervalls vorgegebener Länge, dann wird der Fahrer vom System informiert, dass er die Hände am Lenkrad halten soll. Befolgt der Fahrer diese Anweisung nicht, dann informiert das System den Fahrer über den Abbruch der Funktion.

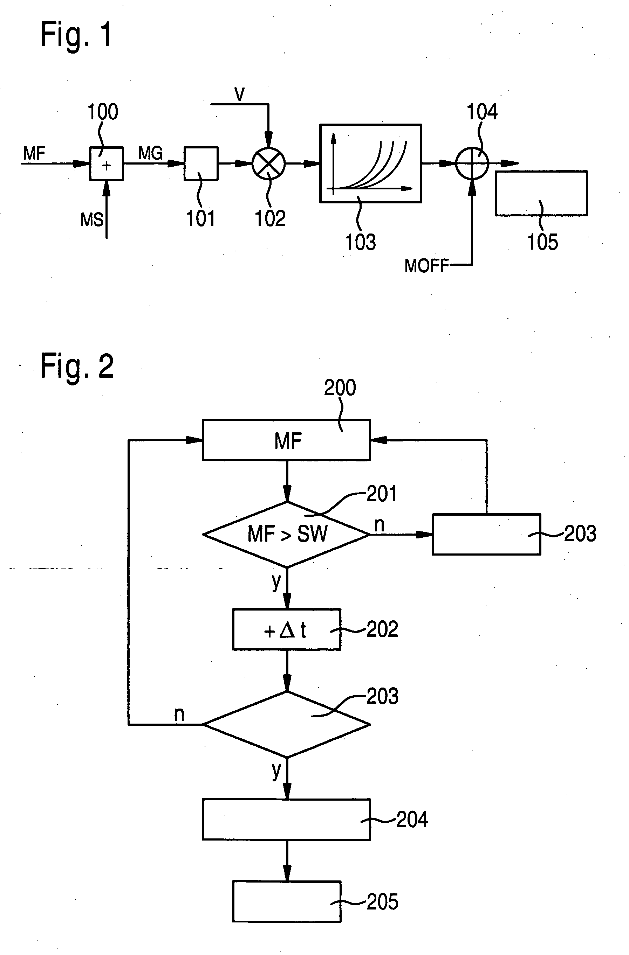

Figur 1 zeigt den Signalfluss einer Lenkassistenzfunktion. Als Eingangsgrößen dienen das vom Fahrer auf das Lenkrad ausgeübte Handmoment MF und das fahrerunabhängige Lenkradmoment MS. Diese werden in Block 100 überlagert und ergeben zusammen das auf das Lenkrad wirkende Gesamtdrehmoment MG. Das Gesamtmoment MG wird in Block 101 mittels eines Drehmomentsensors erfasst. Aus der Differenz zwischen dem gemessenen Gesamtmoment MG und dem z.B. anhand der Ansteuergrößen des Lenkaktors ermittelten fahrerunabhängigen Lenkradmoment MS kann das Handmoment MF ermittelt werden.
Anschließend findet in Block 102 eine Verstärkung des Gesamtmoments MG mit einem Verstärkungsfaktor V statt und daran anschließend in einem Korrekturblock 103 gegebenenfalls eine Korrektur des verstärkten Gesamtmoments. Durch diese Korrektur erfolgt beispielsweise eine Berücksichtigung der aktuellen Fahrzeuggeschwindigkeit oder eine Berücksichtigung des von der Fahrbahn auf die Reifen übertragenen Rückstellmoments. In Block 104 wird noch ein Offsetkorrekturwert MOFF zu dem in Block 103 ermittelten Drehmoment addiert. Dieser Offsetwert kompensiert beispielsweise eine in Querrichtung unsymmetrische Beladung des Fahrzeugs. Das am Ausgang von Block 104 ermittelt Drehmoment wird dem Steuergerät 105 für die fahrerunabhängige Lenkung mitgeteilt.

Ein Beispiel für einen Auswertalgorithmus ist in Fig. 2 dargestellt. Das Verfahren startet in Block 200, dort wird das vom Fahrer auf das Lenkrad ausgeübte Handmoment MF, insbesondere dessen Betrag und dessen Vorzeichen bzw. Richtung, ermittelt. Das Handmoment kann aus der Differenz zwischen einem gemessenen Gesamtmoment und dem z.B. aus Ansteuergrößen ermittelbaren fahrerunabhängigen Moment ermittelt werden. In Block 201 wird ermittelt, ob MF einen Schwellenwert SW überschreitet. Dabei erhält MF dann ein positives Vorzeichen, wenn dessen Richtung entgegen der Richtung des fahrerunabhängigen Lenkmoments weist.
Lautet die Antwort "Ja" (in Fig. 2 stets mit "y" gekennzeichnet), dann wird in Block 202 ein Zeitzähler hochgezählt. Das ist mit "+ Δt" gekennzeichnet. Lautet die Antwort "Nein", dann wird in Block 203 ein Zeitzähler auf 0 gesetzt und anschließend zu Block 200 zurückgegangen. In Block 203 wird abgefragt, ob der Zeitzähler schon einen Schwellenwert überschritten hat. Lautet die Antwort "Nein", dann wird zu Block 200 zurückverzweigt und dort erneut das aktuelle Handmoment ermittelt. Lautet die Antwort "Ja", d.h. der Zeitzähler hat den Schwellenwert überschritten, dann wird in Block 204 festgestellt, dass der Fahrer selbstständig lenkt. Daraufhin werden in Block 205 die fahrerunabhängigen Lenkeingriffe ausgeschaltet bzw. deaktiviert. Das beschriebene Verfahren eignet sich z.B. zum Einsatz bei einem semiautonomen Einparkassistenten.

Zum Einsatz bei einem Spurhalteassistenzsystem wird das in Fig. 2 dargestellte Verfahren lediglich in Block 201 modifiziert. Die Abfrage lautet nun |MF| < SW1, d.h. ob der Betrag von MF einen Schwellenwert MF1 unterschreitet. Wird dieser im allgemeinen sehr niedrig gewählte Schwellenwert unterschritten, dann wird daraus gefolgert, dass der Fahrer sein Hände nicht am Lenkrad hat. Wiederholt sich dies ständig während eines Zeitintervalls vorgegebener Länge, dann werden in Block 205 die fahrerunabhängigen Lenkeingriffe ausgeschaltet bzw. deaktiviert. Das beschriebene Verfahren eignet sich z.B. zum Einsatz bei einem Spurhalteassistenzsystem.

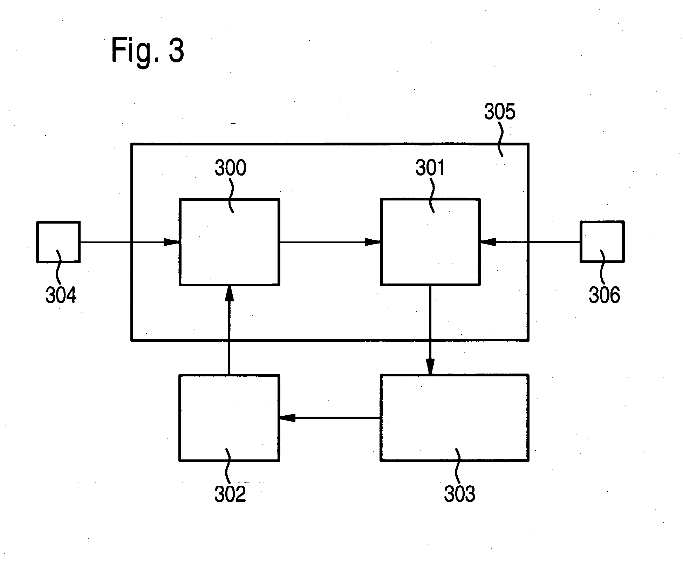

Der Aufbau des erfindungsgemäßen Systems in Fig. 3 dargestellt. Dabei kennzeichnet 300 Aktormittel, welche auf das Lenkrad 301 z.B. durch Aufbringen eines Drehmoments wirken. Block 303 kennzeichnet Ermittlungsmittel, mit denen der Wert einer durch den Fahrer auf das Lenkrad angewandten Fahrerlenkgröße MF ermittelt wird. Der Fahrer ist durch Block 306 dargestellt. Block 302 kennzeichnet Deaktivierungsmittel, mit denen abhängig von der in Block 303 ermittelten Fahrerlenkgröße das Fahrerassistenzsystem 305 deaktiviert wird. Block 304 kennzeichnet weitere Sensoren, anhand derer beispielsweise ein vom Fahrer gewünschter Einparkvorgang oder eine vom Fahrer gewünschte Aktivierung des Spurhaltesystems erkannt wird. Bei diesen weiteren Sensoren kann es sich auch um vom Fahrer einstellbare bzw. betätigbare Schalter handeln, mit welchen er das jeweilige Fahrerassistenzsystem aktiviert.

## Patentansprüche

1. Verfahren zur Deaktivierung eines die Lenkung beeinflussenden Fahrerassistenzsystems,
- bei dem durch das Fahrerassistenzsystem eine fahrerunabhängige Systemlenkgröße (MS) auf das Lenkrad angewandt wird,
- bei dem der Wert einer durch den Fahrer auf das Lenkrad angewandten Fahrerlenkgröße (MF) ermittelt wird und
- abhängig von der Fahrerlenkgröße (MF) das Fahrerassistenzsystem deaktiviert wird, **dadurch gekennzeichnet,**
- **dass** es sich bei dem Fahrerassistenzsystem um ein Spurhalteassistenzsystem handelt und
- **dass** das Spurhalteassistenzsystem deaktiviert wird, wenn der Betrag der Fahrerlenkgröße (MF) während eines Zeitintervalls vorgebbarer Länge stets einen vorgebbaren Schwellenwert (SW1) unterschreitet.

2. Verfahren nach Anspruch 1, **dadurch gekennzeichnet, dass** es sich bei der Systemlenkgröße (MS) um ein vom Fahrerassistenzsystem fahrerunabhängig auf das Lenkrad aufgebrachtes Drehmoment und /oder aufgebrachten Lenkwinkel und/oder aufgebrachte Lenkwinkelgeschwindigkeit handelt.

3. Verfahren nach Anspruch 1, **dadurch gekennzeichnet, dass** es sich bei der Fahrerlenkgröße (MF) um ein vom Fahrer auf das Lenkrad aufgebrachtes Drehmoment und /oder aufgebrachten Lenkwinkel und/oder aufgebrachte Lenkwinkeigeschwindigkeit handelt.

4. Fahrerassistenzsystem zur Beeinflussung der Lenkung, enthaltend
- Aktormittel (300), mit denen eine fahrerunabhängige Systemlenkgröße (MS) auf das Lenkrad (301) angewandt wird,
- Ermittlungsmittel (303), mit denen der Wert einer durch den Fahrer auf das Lenkrad angewandten Fahrerlenkgröße (MF) ermittelt wird und
- Deaktivierungsmittel (302), mit denen abhängig von der Fahrerlenkgröße das Fahrerassistenzsystem deaktiviert wird,
**dadurch gekennzeichnet,**
- **dass** es sich bei dem Fahrerassistenzsystem um ein Spurhalteassistenzsystem handelt und
- **dass** das Spurhalteassistenzsystem deaktiviert wird, wenn der Betrag der Fahrerlenkgröße (MF) während eines Zeitintervalls vorgebbarer Länge stets einen vorgebbaren Schwellenwert (SW1) unterschreitet.

## Claims

1. Method for deactivating a driver assistance system which influences the steering,
- in which a driver-independent system steering variable (MS) is applied to the steering wheel by the driver assistance system,
- in which the value of a driver steering variable (MF) applied to the steering wheel by the driver is determined, and
- the driver assistance system is deactivated as a function of the driver steering variable (MF),
**characterized**
- **in that** the driver assistance system is a lane keeping assistance system
and
- **in that** the lane keeping assistance system is deactivated if the absolute value of the driver steering variable (MF) continuously drops below a predefinable threshold value (SW1) during a time interval of predefinable length.

2. Method according to Claim 1, **characterized in that** the system steering variable (MS) is a torque and/or steering angle and/or steering angle speed applied to the steering wheel independently of the driver by the driver assistance system.

3. Method according to Claim 1, **characterized in that** the driver steering variable (MF) is a torque and/or steering angle and/or steering angle speed applied to the steering wheel by the driver.

4. Driver assistance system for influencing the steering, containing
- actuating means (300) with which a driver-independent system steering variable (MS) is applied to the steering wheel (301),
- determining means (303) with which the value of a driver steering variable (MF) applied to the steering wheel by the driver is determined, and
- deactivation means (302) with which the driver assistance system is deactivated as a function of the driver steering variable,
**characterized**
- **in that** the driver assistance system is a lane keeping assistance system
and
- **in that** the lane keeping assistance system is deactivated if the absolute value of the driver steering variable (MF) continuously drops below a predefinable threshold value (SW1) during a time interval of predefinable length.

## Revendications

1. Procédé de désactivation d'un système d'assistance au conducteur qui agit sur la direction,
- dans lequel une grandeur de direction (MS) imposée par le système et indépendante du conducteur est appliquée sur le volant par le système d'assistance au conducteur,
- dans lequel la valeur d'une grandeur de direction (MF) imposée par le conducteur et appliquée par le conducteur sur le volant est déterminée et
- dans lequel le système d'assistance au conducteur est désactivé en fonction de la grandeur de direction (MF) imposée par le conducteur,
**caractérisé en ce que**
- le système d'assistance au conducteur est un système d'assistance au maintien sur la bande de circulation et
- **en ce que** le système d'assistance au maintien sur la bande de direction est désactivé lorsque le niveau de la grandeur de direction (MF) imposée par le conducteur n'a jamais atteint une valeur de seuil (SW1) prédéterminée au cours d'un intervalle de temps de longueur prédéterminée.

2. Procédé selon la revendication 1, **caractérisé en ce que** la grandeur de direction (MS) imposée par le système est un couple de rotation appliqué sur le volant, un angle de direction appliqué sur le volant et/ou une vitesse angulaire de direction appliquée sur le volant de manière indépendante du conducteur par le système d'assistance au conducteur.

3. Procédé selon la revendication 1, **caractérisé en ce que** la grandeur (MF) de direction imposée par le conducteur est un couple de rotation appliqué sur le volant, un angle de rotation appliqué sur le volant et/ou une vitesse angulaire de rotation appliquée sur le volant par le conducteur.

4. Système d'assistance au conducteur destiné à agir sur la direction et contenant :
- des moyens d'actionneur (300) par lesquels une grandeur de direction (MS) imposée par le système est appliquée sur le volant (301) indépendamment du conducteur,
- des moyens de détermination (303) par lesquelles la valeur d'une grandeur de direction (MF) appliquée par le conducteur sur le volant est déterminée et
- des moyens de désactivation (302) par lesquels le système d'assistance au conducteur est désactivé en fonction de la grandeur de direction imposée par le conducteur,
**caractérisé en ce que**
- le système d'assistance au conducteur est un système d'assistance au maintien sur la bande de circulation et
- **en ce que** le système d'assistance au maintien sur la bande de circulation est désactivé lorsque le niveau de la grandeur (MF) de direction imposée par le conducteur n'a jamais atteint une valeur de seuil prédéterminée (SW1) pendant un intervalle de temps de longueur prédéterminée.
